# EUROPEAN PATENT SPECIFICATION

(11) **EP 0 560 566 B1**
(45) Date of publication and mention of the grant of the patent: **09.08.1995**
(21) Application number: 93301755.0
(22) Date of filing: 09.03.1993
(51) Int. Cl.: A47J 37/12

(54) **Cooker**
Kocher
Dispositif de cuisson

(30) Priority: 09.03.1992 JP 21322/92; 16.03.1992 JP 22956/92
(43) Date of publication of application: 15.09.1993
(73) Proprietor: PALOMA KOGYO KABUSHIKI KAISHA, Nagoya-shi (JP)
(72) Inventor: Ejiri, Susumu, Toyoake-shi, Aichi-pref. (JP); Kimura, Makoto, Inazawa-shi, Aichi-pref. (JP); Hiraoka, Hajime, Nishikasugai-gun, Aichi-pref. (JP)
(74) Representative: Harvey, David Gareth

(56) References cited:
- US-A- 4 628 903
- US-A- 4 913 038
- US-A- 5 090 305

## Description

The present invention relates to a cooker for heating and cooking food items, more particularly in a cooking liquid medium such as water or oil.

In cooking apparatus such as fryer apparatus and noodle cookers for cooking food items in a cooking liquid, determination of the appropriate heating temperature is essential for desirable cooking of food items. For example, a fryer apparatus detects the temperature in cooking oil and controls heating conditions e.g. of a combustor so as to maintain the oil temperature within a predetermined range. Such temperature control is generally implemented through ON/OFF control of the combustor. The combustor starts combustion when the detected oil temperature drops below a predetermined lower limit, and the combustor stops combustion when the detected oil temperature rises over a predetermined upper limit. In this manner, the temperature in cooking oil is maintained within a predetermined range.

Food items are placed into a cooking liquid medium, for example, cooking oil, which has been heated and maintained in a predetermined temperature range. In a conventional cooker like fryer apparatus, when food items are placed into the cooking oil under combustion OFF conditions, the fryer apparatus can not resume combustion immediately, but there is a certain time delay before restart of combustion. The time lag is generally attributed to the temperature sensor which detects the drop in oil temperature below a predetermined value after some delay due to uneven temperature distribution in the cooking oil and convection of the oil in a frypot. The conventional system resumes combustion after the temperature in cooking oil around the cold food items falls undesirably, which may cause underdoing or overdoing of food items.

One object of the invention is to provide an improved cooking apparatus or cooker for desirably cooking food items.

Another object of the invention is to minimize a time lag between placing food items into a cooking liquid medium and the start of heating.

A still another object of the invention is to provide an improved cooker which minimizes abrupt temperature drops of the cooking liquid medium.

US-A-5,090,305 and US-A-4,913,038 disclose apparatus according to the Preamble of claim 1. The present invention is characterized by the features of the characterizing portion of claim 1.

In the above cooker of the invention, the forcible heating control unit controls the heating unit to start forcible heating irrespective of the temperature of the cooking liquid medium. Even when the cooking liquid medium is maintained in a predetermined temperature range by the temperature control unit and is currently under the heating OFF conditions, the heating unit is driven to resume heating immediately by the forcible heating control unit. When cold food items are placed into the cooking liquid medium, the temperature detecting unit detects the temperature fall after some delay due to the uneven temperature distribution and convection of the cooking liquid medium and the response characteristics of the detecting unit, and meanwhile, the temperature in the cooking liquid medium unfavorably drops. The forcible heating control unit forces the heating unit to start heating regardless of the response delay of the temperature detecting unit and thus effectively reduces this unfavorable temperature fall.

The cooker of the invention may further include a restoration unit for outputting a restoration signal to the temperature control unit to resume normal heating control when the temperature in the cooking liquid medium drops below a predetermined value after start of forcible heating.

In this structure, the restoration unit automatically stops forcible heating and instructs the temperature control unit to resume normal heating control when the temperature in the cooking liquid medium becomes lower than a predetermined value after the forcible heating. When the predetermined value is set to be equal to the lower limit of the predetermined temperature range maintained by the temperature control unit, the normal heating control starts when the temperature of the liquid medium drops below the lower limit to continue heating. This automatic restoration system to the normal heating control makes the operator free from troublesome manual switching operations.

Alternatively, the cooker of the invention may include another restoration unit for outputting a restoration signal to the temperature control unit to resume normal heating control when a preset time period has elapsed since the start of forcible heating.

In this alternative structure, the restoration unit automatically stops forcible heating and instructs the temperature control unit to resume normal heating control when a preset time period has elapsed since the start of forcible heating. The restoration timing or the preset time period is determined by taking account of the temperature change in the cooking liquid medium due to forcible heating.

The cooker of the invention may include still another restoration unit for outputting a restoration signal to the temperature control unit to resume normal heating control when an upward slope of the temperature in the cooking liquid medium becomes equal to or greater than a predetermined second limit after start of forcible heating.

In this structure of the invention, the restoration unit automatically stops forcible heating and instructs the temperature control unit to resume normal heating control when an upward slope of the temperature becomes equal to or greater than a predetermined limit after start of forcible heating. When cold food items are placed into the cooking liquid medium, the temperature of the liquid medium drops abruptly in the first stage, but the forcible heating gradually reduces the downward slope in temperature and finally raises the temperature. When the temperature slope goes upward, the normal heating control is resumed. The restoration unit outputs a restoration signal to the temperature control unit at the timing corresponding to the variation in temperature. If forcible heating starts mistakenly without food items, the restoration unit stops the forcible heating based on the upward slope in temperature, thus efficiently preventing overheat of the cooking liquid medium.

The present invention will be explained in more detail by way of example in the following detailed description, taken in conjunction with the accompanying drawings, in which:
Fig. 1 is a view schematically illustrating a fryer apparatus embodying the invention;
Fig. 2A is a flowchart showing a combustion control routine;
Fig. 3A is a flowchart showing another restoration step for resuming normal ON/OFF control;
Fig. 3B is a flowchart showing still another restoration step for resuming normal ON/OFF control;
Fig. 4 is a graph showing the temperature change detected by the temperature sensor of Fig. 1 when the routine of Fig. 2A, or 3A is executed; and
Fig. 5 is a graph showing the temperature change detected by the temperature sensor of Fig. 1 when the restoration step of Fig. 3B is executed.

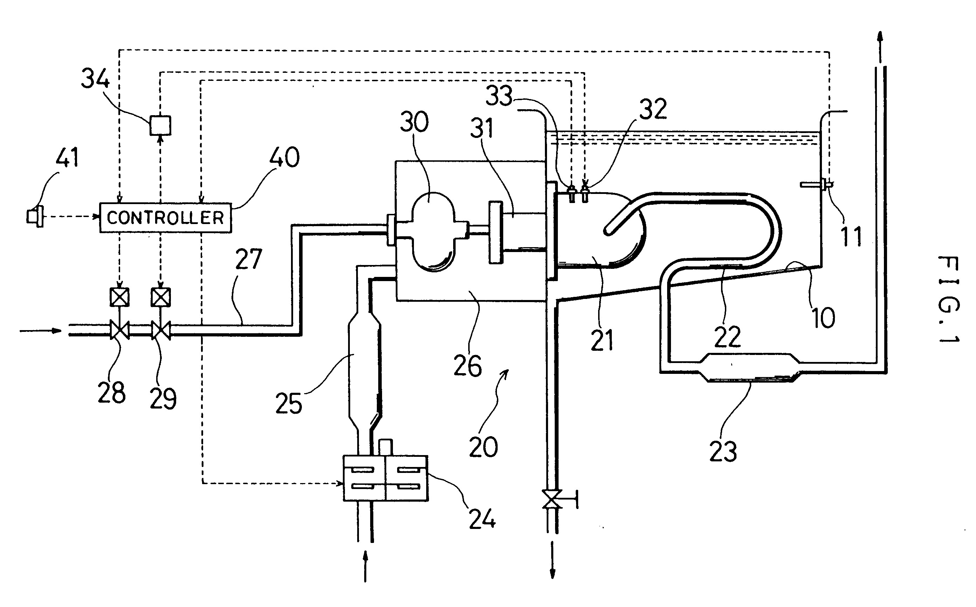

Fig. 1 is a schematic view illustrating a fryer apparatus as a first embodiment of the invention. The fryer apparatus of the embodiment used for cooking or deep fat frying of food items such as french fries or breaded chickens includes: a frypot 10 which is filled with cooking liquid or oil; a pulse combustor 20 for heating the cooking oil in the frypot 10; and a combustion controller 40 for controlling combustion of the pulse combustor 20.

The pulse combustor 20 in the fryer apparatus has a combustion-exhaust system, an air supply system, and a fuel gas supply system.

The combustion-exhaust system includes: a combustion chamber 21 disposed in the frypot 10 for pulse combustion; a tail pipe 22 winding its way through the frypot 10 and constituting an exhaust conduit of hot combustion byproducts from the combustion chamber 21; and an exhaust muffler 23 formed in the middle of the tail pipe 22. The cooking oil in the frypot 10 is heated by thermal energy transmitted through the outside walls of the combustion chamber 21 and the tail pipe 22. A temperature sensor 11 for detecting the temperature of the cooking oil in the frypot 10 is attached to the side wall of the frypot 10.

The air supply system for supplying air to the combustion chamber 21 includes: a fan 24 for feeding the air for combustion; an intake muffler 25 connected to the fan 24; and an air chamber 26 coupled to the combustion chamber 21 for receiving the air fed through the intake muffler 25.

The fuel gas supply system includes: first and second electromagnetic valves 28 and 29 mounted in the middle of a gas conduit 27 for opening and closing a flow path of fuel gas; and a gas chamber 30 disposed in the air chamber 26.

In the air chamber 26, there is a mixing chamber 31 coupled with and connected to the gas chamber 30. The fuel gas is supplied into the mixing chamber 31 via the gas chamber 30 while the air being supplied thereto via the air chamber 26. The separately supplied fuel gas and air are mixed in the mixing chamber 31 and transmitted to the combustion chamber 21 as an air/fuel mixture. The combustion chamber 21 is provided with an ignition plug 32 for igniting the air/fuel mixture on the commencement of combustion, and a flame rod 33 for detecting the flame.

The pulse combustor 20 thus constructed repeats explosion and combustion at a fixed cycle by taking advantage of its automatic ignition and absorption characteristics at stationary combustion. In the first embodiment, a pair of check valves or flapper valves (not shown) are attached to the respective inlets of the fuel gas and the air to the mixing chamber 31 so as to prevent back flow of combustion exhaust into the fuel gas supply system and the air supply system.

The combustion controller 40 for controlling combustion of the pulse combustor 20 is constructed as a microcomputer including: a conventional arithmetic/logic/operation circuit consisting of a CPU or central processing unit, a ROM or reading only memory, and a RAM or random access memory, an input interface for inputting signals sent from the temperature sensor 11 and the flame rod 33, and an output interface for outputting control signals to the first and second electromagnetic valves 28 and 29, the fan 24, and an igniter 34. None of these elements are shown in the drawing of Fig. 1. The combustion controller 40 is further connected to a forcible combustion switch 41 which starts forcible combustion irrespective of the oil temperature detected by the temperature sensor 11.

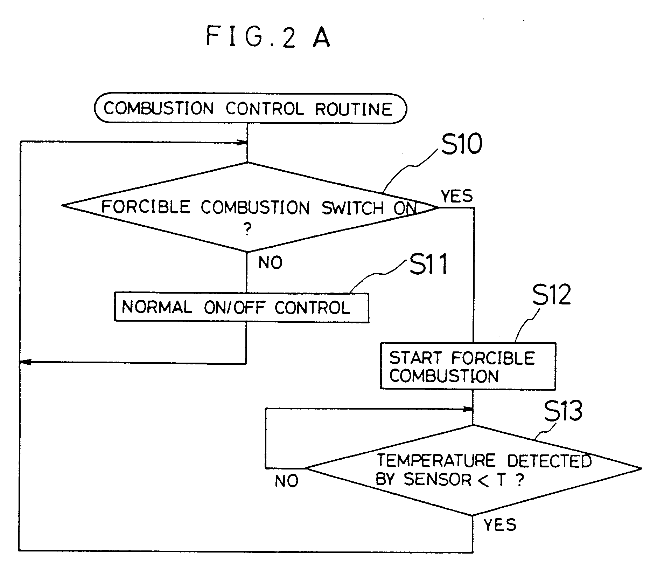

A combustion control routine executed by the fryer apparatus of the first embodiment is described according to the flowchart of Fig. 2A. Along with execution of the combustion control routine, the temperature sensor 11 detects the temperature of the cooking oil.

Under the normal combustion conditions, the combustion controller 40 starts and stops combustion (controls the combustion ON and OFF) to maintain the temperature of cooking oil within a predetermined range. When the commbustion control routine starts, at step S10 it is determined whether the forcible combustion switch 41 is actuated. When the answer is NO at step S10, the program goes to step S11 where the combustion controller 40 continues normal ON/OFF control based on the output of the temperature sensor 11, that is, the temperature in cooking oil detected at a fixed cycle. In the fryer apparatus of this preferred embodiment, combustion starts when the temperature on the temperature sensor 11 falls below 180°C, and combustion stops when the temperature rises over 182°C. The temperature of the cooking oil is thus efficiently maintained in a range between 180°C and 182°C.

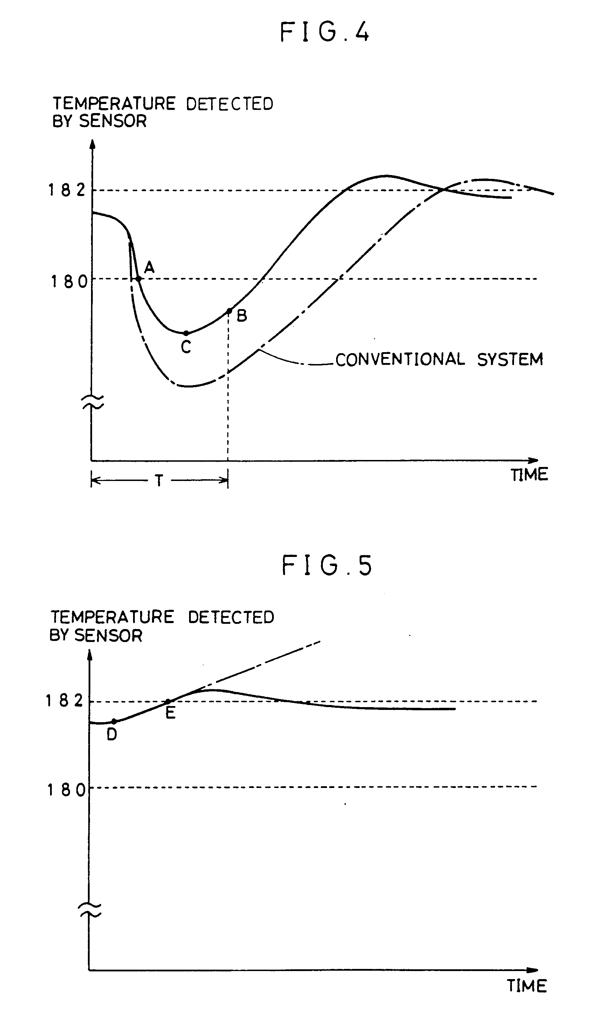

Food items held in a food basket (not shown) are placed and deep fried in the cooking oil which is heated and maintained in the above predetermined range. The operator presses the forcible combustion switch 41 when placing food items in the cooking oil. A press of the forcible combustion switch 41 makes the program go to step S12 at which forcible combustion starts irrespective of the temperature at the temperature sensor 11 at the time of switch-on. Namely, forcible combustion starts even when the cooking oil is currently in the predetermined temperature range and currently under the combustion OFF conditions. This efficiently solves the drawbacks of the response delay of the temperature sensor 11 due to the uneven temperature distribution and convection in the oil, and effectively reduces the undesirable temperature drop due to cold food items as clearly seen in the graph of Fig. 4 which shows a comparison of the temperature change between this embodiment and a conventional system.

After forcible combustion starts at step S12, the program proceeds to step S13 at which the restoration timing to resume normal ON/OFF control is determined according to the temperature at the temperature sensor 11. More specifically, at step S13, the temperature on the temperature sensor 11 is compared with a predetermined temperature T (for example, 180°C). When the measured temperature becomes lower than the predetermined temperature T, the program returns to step S10; that is, the combustion conditions are restored to normal ON/OFF control at a time point A in the graph of Fig. 4. The pulse combustor 20 continues combustion after the time point A, and stops combustion when the temperature detected by the temperature sensor 11 becomes greater than 182°C. This system of the first embodiment automatically resumes normal ON/OFF control, and makes the operator free from troublesome manual switching operations.

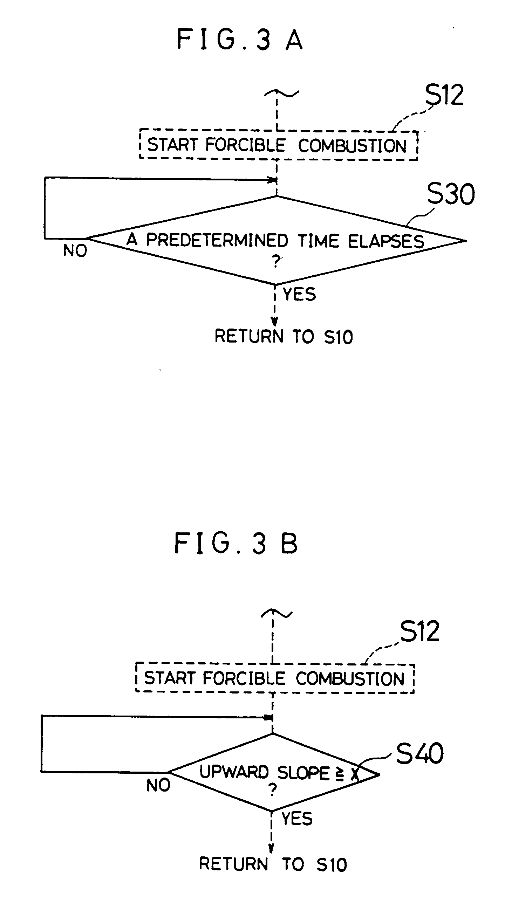

Another combustion control routine is described according to the flowchart of Fig. 3A, which includes step S30 in place of step S13 of Fig. 2A. When forcible combustion starts at step S12, the program proceeds to step S30 at which the combustion controller 40 waits until a predetermined time T elapses after the start of forcible combustion, and then returns to step S10 of Fig. 2A. For example, in the temperature-time curve of Fig. 4, the combustion conditions are restored to normal ON/OFF control at a time point B. The pulse combustor 20 continues combustion after the time point B, and stops combustion when the temperature detected by the temperature sensor 11 becomes greater than 182°C.

Still another combustion control routine is described according to the flowchart of Fig. 3B, which includes step S40 in place of step S13 of Fig. 2A. When forcible combustion starts at step S12, the program proceeds to step S40 at which an upward slope (°C / second) of the temperature detected at a fixed cycle becomes equal to or greater than a predetermined limit X. When cold food items are placed into the cooking oil, the oil temperature drops abruptly in the first stage, but forcible combustion gradually reduces the downward slope in temperature and finally starts raising the temperature. When the upward slope of the oil temperature reaches the predetermined limit X, the program returns to step S10 of Fig. 2A for restoration of normal ON/OFF control. In this embodiment, the limit X may be set to a very small positive value substantially equal to zero. The combustion controller 40 thus instructs the pulse combustor 20 to resume normal ON/OFF control when the temperature curve goes upward. For example, in the temperature-time curve of Fig. 4, the combustion conditions are restored to normal ON/OFF control at a time point C. The pulse combustor 20 continues combustion after the time point C, and stops combustion when the temperature detected by the temperature sensor 11 becomes greater than 182°C.

Even when forcible combustion is started without food items by mis-operation of the forcible combustion switch 41, the system of this embodiment stops forcible combustion based on the upward slope in temperature and efficiently prevents overheating the cooking oil. In a conventional system, if forcible combustion starts mistakenly without food items, the oil temperature increases to overheat as shown by the one-dot chain line of Fig. 5. In the system of this embodiment, on the contrary, the combustion controller 40 determines restoration to normal ON/OFF control based on the upward slope of the oil temperature. For example, in the temperature-time curve of Fig. 5, the combustion conditions are restored to normal ON/OFF control at a time point D, and combustion stops at a time point E. Dangerous overheating of cooking oil is thus efficiently and securely prevented.

When the temperature detected by the temperature sensor 11 fluctuates, the combustion controller 40 executes the combustion control routine based on the mean temperature to prevent mis-detection of the upward slope.

Since there may be many modifications, alterations, and changes without departing from the scope of the appended claims, so it should be clearly understood that the above embodiments are only illustrative and not restrictive in any sense. For example, the structure of the invention is applicable to various cooking apparatus or cookers other than the fryer apparatus described. These cooking apparatus or cookers may include as heat sources Bunsen burners or similar gas burners, or electric heaters in place of the pulse combustor described, and hence "combustion", "combustor" and the like should be interpreted broadly to mean "heating", "heater" and the like.

## Claims

1. A cooker for cooking food items in a cooking liquid medium comprising:
heating means (21, 22) for heating said cooking liquid medium such as oil or water;
temperature detecting means (11) for detecting the temperature of said cooking medium;
temperature control means (40) for controlling said heating means (21, 22) to start and stop heating based on the temperature of said cooking liquid medium detected by said temperature detecting means so as to maintain said cooking liquid medium in a predetermined temperature range; and
forcible heating control means (41) for controlling said heating means (21,22) to start forcible heating ,characterized in that the forcible heating control means (41) is arranged to start forcible heating of the cooking liquid medium irrespective of the temperature of the cooking liquid medium, and in that there is included a manually operable switch means to activate said forcible control means (41), so that it is activatable concurrently with placing food items in said cooking liquid medium

2. A cooker in accordance with claim 1, further comprising first restoration means (S13) for outputting a restoration signal to said temperature control means (40) to resume normal heating control when the temperature in said cooking liquid medium drops below a predetermined value after start of forcible heating.

3. A cooker in accordance with claim 1, further comprising second restoration means (S12, S30) for outputting a restoration signal to said temperature control means (40) to resume normal heating control when a preset time period has elapsed since the start of forcible heating.

4. A cooker in accordance with claim 1, further comprising third restoration means (S12, S40) for outputting a restoration signal to said temperature control means (40) to resume normal heating control when an upward slope of the temperature in said cooking liquid medium becomes equal to or greater than a predetermined limit after start of forcible heating.

## Patentansprüche

1. Kocher zum Garen von Nahrungsmitteln in einem flüssigen Kochmedium, enthaltend:
Heizvorrichtungen (21, 22) zum Erhitzen des flüssigen Kochmediums wie Öl oder Wasser,
Temperaturfühler (11) zur Ermittlung der Temperatur des Kochmediums,
Temperaturregler (40) zur Steuerung der Heizvorrichtungen (21, 22), um aufgrund der vom Temperaturfühler ermittelten Temperatur des flüssigen Kochmediums die Heizung an- und auszuschalten und so das flüssige Kochmedium in einem vorher festgesetzten Temperaturbereich zu halten, und
Schnellheizregler (41) zur Steuerung der Heizvorrichtungen (21, 22) für den Start des Schnellheizens, dadurch gekennzeichnet, daß der Schnellheizregler (41) so eingestellt ist, daß er unabhängig von der Temperatur des flüssigen Kochmediums mit dem schnellen Erhitzen des flüssigen Kochmediums beginnt und ein von Hand bedienbarer Schalter zur Aktivierung des Schnellheizreglers (41) vorhanden ist, so daß die Aktivierung gleichzeitig mit der Zugabe von Nahrungsmitteln in das flüssige Kochmedium möglich ist.

2. Kocher gemäß Anspruch 1, außerdem enthaltend eine erste Rückstellvorrichtung (S13) zur Ausgabe eines Rückstellsignals an den Temperaturregler (40) für die Rückkehr zu normaler Heizungssteuerung, wenn die Temperatur des flüssigen Kochmediums nach Beginn des Sehnellheizens unter einen vorher festgesetzten Wert fällt.

3. Kocher gemäß Anspruch 1, außerdem enthaltend zweite Rückstellvorrichtungen (S12, S30) zur Ausgabe eines Rückstellsignals an den Temperaturregler (40) für die Rückkehr zu normaler Heizungssteuerung, wenn nach Beginn des Schnellheizens die vorher festgesetzte Zeit abgelaufen ist.

4. Kocher gemäß Anspruch 1, außerdem enthaltend dritte Rückstellvorrichtungen (S12, S40) zur Ausgabe eines Rückstellsignals an den Temperaturregler (40) für die Rückkehr zu normaler Heizungssteuerung, wenn nach Beginn des Schnellheizens die nach oben gerichtete Steigung der Temperatur des flüssigen Kochmediums einem vorher festgesetzten Wert entspricht oder darüber liegt.

## Revendications

1. Appareil de cuisson pour faire cuire des produits alimentaires dans un milieu liquide de cuisson comportant:
des moyens de chauffage (21, 22) pour chauffer ledit milieu liquide de cuisson tel que de l'huile ou de l'eau;
des moyens de détection de température (11) pour détecter la température dudit milieu de cuisson;
des moyens de contrôle de température (40) pour commander lesdits moyens de chauffage (21, 22) pour démarrer et arrêter le chauffage en fonction de la température dudit milieu liquide de cuisson détectée par lesdits moyens de détection de température de façon à maintenir la température dudit milieu liquide de cuisson dans une plage de valeurs prédéterminée; et
des moyens de commande de chauffage forcé (41) pour commander lesdits moyens de chauffage (21, 22) pour démarrer le chauffage forcé;
caractérisé en ce que les moyens de commande de chauffage forcé (41) sont conçus pour démarrer le chauffage forcé du milieu liquide de cuisson quelle que soit sa température et en ce que l'appareil comprend des moyens de commutation à fonctionnement manuel pour activer lesdits moyens de commande de chauffage forcé (41), afin que ceux-ci puissent également être activés lors du placement de produits alimentaires dans ledit milieu liquide de cuisson.

2. Appareil de cuisson selon la revendication 1, comportant en outre des premiers moyens de reprise (S13) pour envoyer un signal de reprise auxdits moyens de contrôle de température (40) pour reprendre la commande normale de chauffage quand la température dudit milieu liquide de cuisson chute au-dessous d'une valeur prédéterminée après le démarrage du chauffage forcé.

3. Appareil de cuisson selon la revendication 1, comportant en outre des deuxièmes moyens de reprise (S12, S30) pour envoyer un signal de reprise auxdits moyens de contrôle de température (40) pour reprendre la commande normale de chauffage quand s'est écoulée une durée déterminée depuis le démarrage du chauffage forcé.

4. Appareil de cuisson selon la revendication 1, comportant en outre des troisièmes moyens de reprise (S12, S40) pour envoyer un signal de reprise auxdits moyens de contrôle de température (40) pour reprendre la commande normale de chauffage quand une pente ascendante de la température dans ledit milieu liquide de cuisson devient supérieure ou égale à une limite prédéterminée après le démarrage du chauffage forcé.
